# EUROPEAN PATENT SPECIFICATION

(11) **EP 1 472 444 B1**
(45) Date of publication and mention of the grant of the patent: **10.05.2006**
(21) Application number: 02781549.7
(22) Date of filing: 20.11.2002
(51) Int. Cl.: F02B 37/18, F02B 37/007, F02B 37/24, F01D 25/22

(54) **TURBOCHARGING SYSTEM AND A METHOD FOR TURBOCHARGING OF AN INTERNAL COMBUSTION ENGINE**
TURBOSYSTEM FÜR BRENNKRAFTMASCHINE UND ENTSPRECHENDES VERFAHREN
SYSTEME DE TURBOCOMPRESSION ET PROCEDE DE TURBOCOMPRESSION D'UN MOTEUR A COMBUSTION INTERNE

(43) Date of publication of application: 03.11.2004
(73) Proprietor: Honeywell International, Inc., Morristown, New Jersey 07962 (US)
(72) Inventor: WATKIN, Ken, F-88150 Thaon-les-Vosges (FR); FIGURA, Giorgio, F-88150 Thaon-les-Vosges (FR); TRUCCO, Francesco, F-88150 Thaon-les-Vosges (FR); MATHIEU, Philippe, F-88150 Thaon-les-Vosges (FR); BARTHELET, Pierre, F-88150 Thaon-les-Vosges (FR); DAVANZO, Vagner, F-88150 Thaon-les-Vosges (FR)
(74) Representative: TBK-Patent
(86) International application number: PCT/IB2002/004835
(87) International publication number: WO 2004/046519

(56) References cited:
- EP-A- 0 212 091
- EP-A- 1 215 378
- DE-A- 19 835 594
- FR-A- 853 946
- GB-A- 1 315 307
- US-A- 3 250 068
- US-A- 5 035 114
- US-B1- 6 338 250
- US-B1- 6 357 234
- PATENT ABSTRACTS OF JAPAN vol. 008, no. 191 (M-322), 4 September 1984 (1984-09-04) & JP 59 082526 A (HINO JIDOSHA KOGYO KK), 12 May 1984 (1984-05-12)

## Description

The invention relates to the architecture of a boosting system as turbocharging system and a method for turbocharging of an internal combustion engine. The invention relates in particular to multi-stage turbocharger systems with turbochargers which are connected in parallel.

There are known conventional boosting systems using turbochargers having different constructions and function. For example in some turbochargers the exhaust gas flow driving the turbine is regulated in order to improve the efficiency of the turbocharger when it is used under different operational conditions of the internal combustion engine. For achieving a control of the gas flow through the turbine at the turbine side of the turbocharger, there is provided a variable nozzle device comprising nozzle passages of variable geometry.

There are also known turbochargers comprising a free floating turbine, which means that the turbine side does not comprise any mechanism for regulating the gas flow driving the turbine wheel. Finally, there are also known boosting systems comprising more than one turbocharger, wherein the turbochargers are connected either in parallel or in series. Such boosting systems have been developed for increasing the engine performance at steady state and transient working condition of the internal combustion engine.

According to document US-6,378,308 B1 there is known a conventional boosting system comprising two turbochargers. This boosting system comprises one high-pressure stage and one low-pressure stage, which is arranged downstream of the high pressure stage. The turbine of the turbocharger at the high pressure stage is continuously flowed through by a minimum exhaust mass flow, so that the turbine is permanently rotating. The system further comprises bypass piping by means of which variable partial flows of the entire exhaust mass flow are distributed to the high pressure turbine, to the low-pressure turbine and optionally to the fresh air side of the engine.

According to document US-5,611,202, there is disclosed a turbocharging system comprising two turbochargers arranged in parallel, wherein the fresh air conduit delivering fresh air to one of the compressors is provided with a check walve. Further, there is provided an exhaust gas re-circulation conduit for re-circulating exhaust gas back into the fresh air supply conduit of only one of the compressors.

According to document US-5,035,114, there is provided a turbocharging system comprising two turbochargers arranged in parallel, wherein one of the compressors is provided with a fresh air re-circulation system comprising an intake relief walve for adjusting the amount of fresh air re-circulated through said compressor.

The object of the invention is to provide an improved turbocharging system consisting of two turbochargers arranged in parallel.

The object of the invention is achieved by the combination of the features defined in claim 1. Preferable embodiments of the invention are set forth in the sub-claims.

In the following different aspects of the invention are explained in detail by embodiments with reference to the drawings. In the drawings:
Fig. 1 shows a first embodiment of the sequential turbocharging system according to the invention;
Fig. 2 shows a second embodiment of the sequential turbocharging system according to the invention;
Fig. 3 shows a third embodiment of the sequential turbocharging system according to the invention;
Fig. 4 shows a fourth embodiment of the sequential turbocharging system according to the invention;

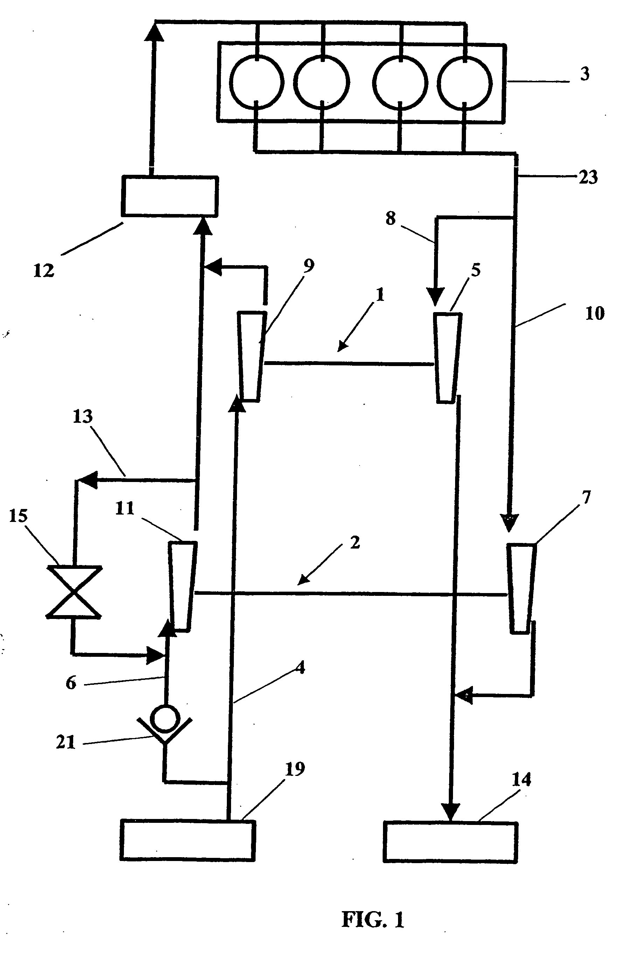

A sequential turbocharging system according to a frist embodiment of the invention is shown in Fig. 1. The system comprises a first turbocharger 1 and a second turbocharger 2, wherein the two turbochargers are connected in parallel in relation to the internal combustion engine 3. The first turbocharger 1 comprises a free floating turbine 5 at its turbine side, wheras the second turbocharger 2 is equipped with a variable geometry turbine 7. The turbines 5 and 7 and the respective compressors 9 and 11 are connected in parallel. According to the layout of this embodiment fresh air is fed in parallel to each of the compressors by means of a first fresh air conduit 4 and a second fresh air conduit 6 and the air discharged from the compressors is guided through an intercooler 12 to the intake side of the internal combustion engine 3. At the turbine side of the layout the exhaust from the engine 3 is fed through a first exhaust conduit 8 and a second exhaust conduit 10 branching from a conduit or piping 23 to the first and second turbine 5 and 7, respectively, and the exhaust discharged from the parallel turbines 5 and 7 is guided to a catalyst 14.

In the multi-turbocharger boosting system shown in Fig. 1 the second compressor 11 is provided with an air re-circulation system using air flow regulating means for adjusting the amount of the re-circulated air. The re-circulation system in this embodiment includes a by-pass conduit 13 with a butterfly valve 15 for adjusting the air mass-flow re-circulated back into the second fresh air conduit 6 connecting the inlet of the second compressor 11 with an air filter 19. In the second fresh air conduit 6 there is arranged a non-return valve 21 which allows that air be sucked into the inlet of the second compressor 11, but avoids any backflow to the air filter 19.

The multi-turbocharger boosting system according to the embodiment shown in Fig. 1 allows a highly efficient function of the internal combustion engine at low, medium and high rotational speeds of the internal combustion engine.

At a low rotational speed of the internal combustion engine 3, which means at about 1000-2000 rpm, the exhaust gas supplied through the exhaust conduit or piping 23 drives the free floating turbine 5 of the first turbocharger 1, whereas the variable geometry turbine 7 of the second turbocharger 2 remains nearly closed. Under these conditions the second turbocharger 2 is rotated at a very low speed so as just to avoid oil leakage due to the operational oil pressure in the bearing system of the second turbocharger. At the stage of low rotational speed of the internal combustion engine the butterfly valve 15 is open so as to allow re-circulation through the second compressor 11, wherein under these operational conditions the non-return valve 21 remains closed. As can be understood at this stage only the first turbocharger 1 works normally to supercharge the engine 3.

In the range of a medium rotational speed of the internal combustion engine, which means at about 2000-2500 rpm, the variable geometry turbine 7 of the second turbocharger 2 is progressively opened, in order to regulate the pressure before the turbine, i.e. at the inlet connected to the exhaust conduit 8. At this stage, the butterfly valve 15 in the by-pass conduit 13 of the second compressor 11 is progressively closed in order to balance the power between the second compressor 11 and the second turbine 7, so that by operation of the butterfly valve 15 the speed of the second turbocharger 2 can be regulated.

In the range of a high rotational speed of the internal combustion engine, which means at about 2500 - 4000 rpm, the variable geometry turbine 7 is 50% open, in order to work with a good efficiency and at the same time to keep a margin for over-speed. At this stage, the butterfly valve 15 is totally closed and the non-return valve 21 is open to allow the feeding of fresh air from the air filter 19.

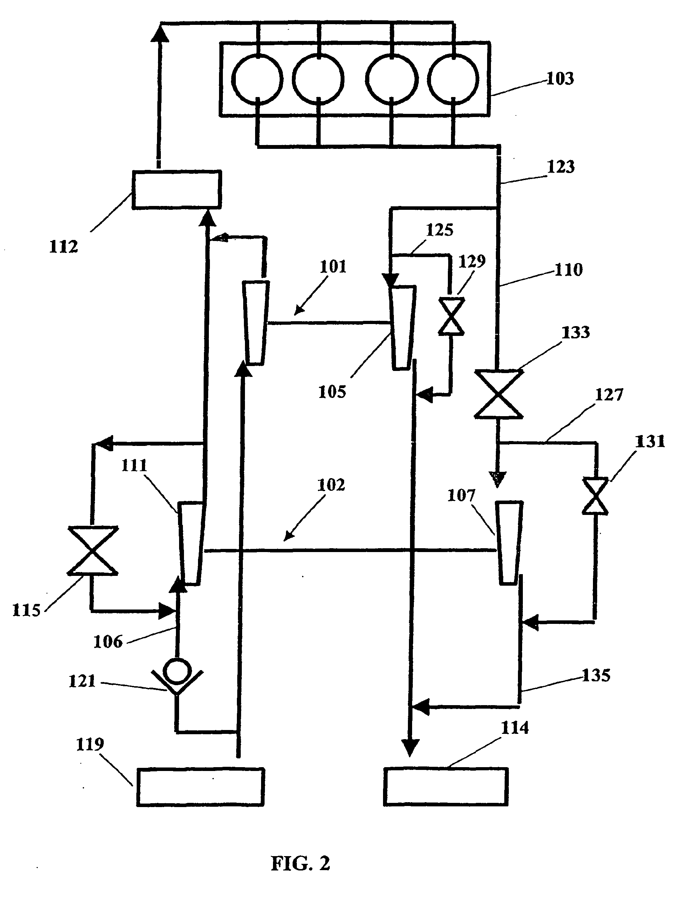

A second embodiment of the multi-turbocharger boosting system according to the invention is shown in Fig. 2. The compressor side of the layout according to this embodiment is the same as in the first embodiment, wherein only the turbocharger side is modified such that at each turbine 105, 107 there is provided a first bypass passage 125 and a second bypass passage 127 with corresponding first and second waste gate valves 129 and 131, respectively. In addition a second butterfly or throttle valve 133 is arranged in the second exhaust conduit 110.

At a low rotational speed of the internal combustion engine 103, which means at about 1000-2000 rpm, the exhaust gas supplied through the exhaust conduit or piping 123 drives the free floating turbine 105 of the first turbocharger 101. The butterfly valve 133 is nearly closed to make leakage exhaust gas flow to ensure an idling rotation of the second turbocharger 102 so as merely to avoid oil leakage from the bearing system thereof. Under this condition the speed of the first turbocharger is controlled by means of the waste gate valve 129. In the same time the waste gate valve 131 remains closed and the first butterfly valve 115 is open to cause re-circulation of fresh air through the second compressor 111, while the nonreturn valve 121 remains also closed. At this stage the first turbocharger works normally to supercharge the engine 103.

In the range of a medium rotational speed of the internal combustion engine, which means at about 2000-2500 rpm, the butterfly or throttle valve 133 opens progressively so as to regulate the pressure before the turbine and the exhaust gas flow drives the second turbocharger 102. In the same time the butterfly valve 115 is progressively closed in order to balance the power between the second compressor 111 and the second turbine 107, so that by operation of the butterfly valve 115 the speed of the second turbocharger 102 can be regulated.

In the range of a high rotational speed of the internal combustion engine, which means at about 2500 - 4000 rpm, the butterfly valve 133 is completely or almost completely open, wherein the speed of the first and second turbines 105 and 107 is regulated by means of the first and second waste gate valves 129 and 131, respectively. During this operation the butterfly valve 115 is completely closed and the nonreturn valve 121 is open.

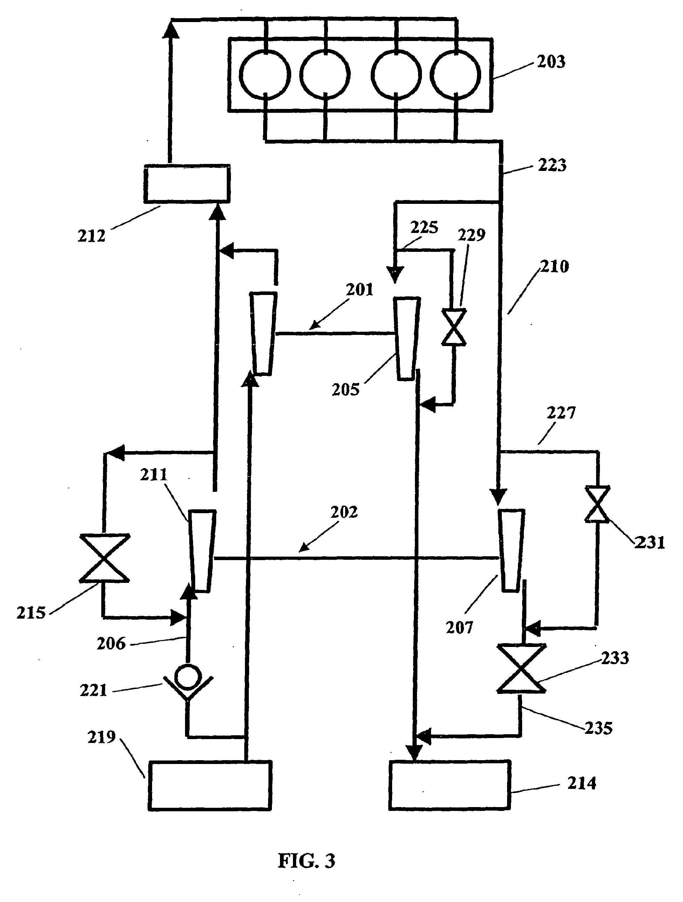

The second embodiment of the multi-turbocharger boosting system according to the invention shown in Fig. 2 can be preferably modified according to the layout shown in Fig. 3. According to the third embodiment shown in this figure the butterfly valve 233 is removed from the second exhaust conduit 210 and arranged in the outlet conduit 235 of the second turbine 207 downstream of the point where the second bypass passage 227 merges in the outlet conduit 235. By means of this arrangement such a pressure can be maintained within the second turbine 207 which is able to avoid oil leakage.

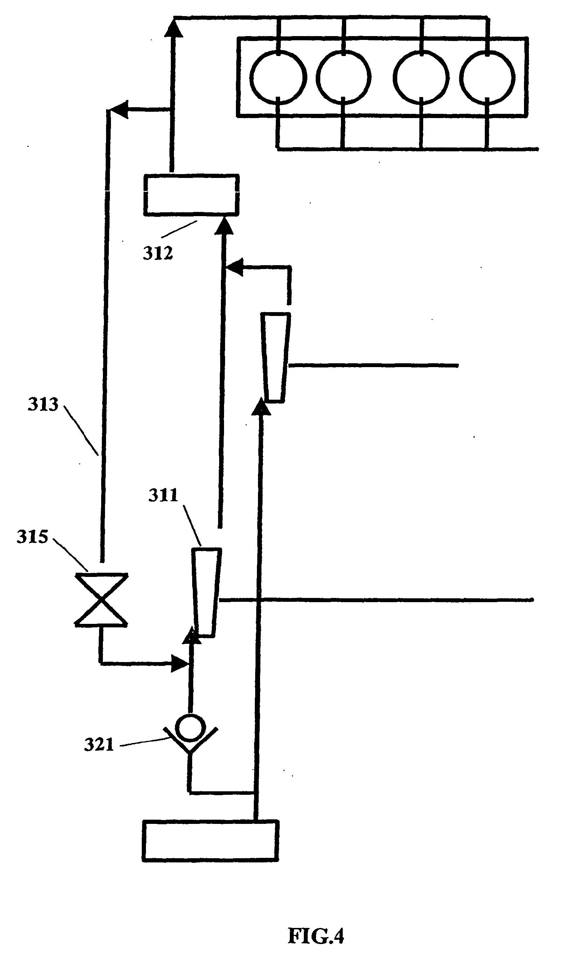

In Fig. 4 there is illustrated a fourth embodiment of the multi-turbocharger boosting system related to a preferable alternative design of the compressor side of the sequential turbocharging system according to each of the first, second and third embodiment. This design differs from the previous embodiments in that the by-pass conduit 313 does not merge in the fresh air supply immediately downstream of the second compressor 311 but downstream of the intercooler 312. Since for the re-circulation cooled air is used from the intercooler 312 the result of such modified arrangement is that the temperature in the second compressor 311 is reduced, and thus the risk of coking in this compressor is efficiently minimised.

In all embodiments described above air bearing or ball bearing are preferably used for the compressor and turbine shaft in the construction the second turbocharger. When using air bearing or ball bearing, the rotation of the second turbocharger can be stopped which is an advantage for low engine rotational speed because the operation of the second turbocharger is not necessary for this phase.

In the embodiments related to the design of the compressor side of the turbocharging system, the arrangement of the check valve or nonreturn valve 21, 121, 221, 321 in the inlet passage for delivering air from the air filter to the second compressor makes sure that relative high pressure can be maintained within the second turbocharger, which is of importance for avoiding oil leakage from the bearing system thereof.

Further, in all embodiments at least one speed sensor is arranged at the shaft of the second compressor for delivering data to a non-particularly illustrated control unit for regulating the adjustable valves. For a further improved control it is preferable to attach speed sensors to the shafts of all turbochargers of the turbocharging system.

## Claims

1. A turbocharging system with at least two turbochargers arranged in parallel, said turbochargers comprising a first compressor (11; 111; 211; 311) and a second compressor (9) having a first fresh air conduit (6) and a second fresh air conduit (4), respectively, wherein said first fresh air conduit (6) is provided with flow regulation means (21; 121; 221; 321) at the inlet of said first compressor (11; 111; 211; 311) and said first compressor (11; 111; 211; 311) is provided with a fresh air re-circulation system (13, 15; 312, 313, 315) comprising additional regulating means (15; 115; 215; 315) for adjusting the amount of fresh air re-circulated through said first compressor (11; 111; 211; 311).

2. A turbocharging system according to claim 1, wherein said re-circulation system (312, 313, 315) comprises a cooling device (312) for cooling the air re-circulated in said first compressor (311).

3. A turbocharging system according to claim 1 or 2, wherein said flow regulation means comprise adjustable throttle or butterfly valve.

4. A turbocharging system according to claim 1 or 2, wherein said flow regulation means comprise a nonreturn valve.

5. A turbocharging system according to one of claims 1 to 4, wherein at least one turbocharger has a lubricant-free bearing system for the shaft carrying the respective compressor and turbine wheel.

6. A sequential turbocharging system acording to claim 5, wherein the lubricant-free bearing system is an air bearing system.

7. A turbocharging system according to one of claims 1 to 4, wherein at least one turbocharger has a ball bearing system, in particular a ball bearing system with a rolling contact between the shaft of the turbocharger and the bearing balls.

8. A turbocharging system according to one of claims 1 to 4, wherein one turbocharger is a turbocharger having a variable geometry turbine and a variable geometry compressor.

## Patentansprüche

1. Turboladersystem mit mindestens zwei parallel geschaltet angeordneten Turboladern, wobei die Turbolader einen ersten Verdichter (11; 111; 211; 311) und einen zweiten Verdichter (9) aufweisen, die jeweils einen ersten Frischluftkanal (6) und einen zweiten Frischluftkanal (4) haben, wobei der erste Frischluftkanal (6) mit einer Strömungsregelungseinrichtung (21; 121; 221; 321) an dem Einlass des ersten Verdichters (11; 111; 211; 311) versehen ist und der erste Verdichter (11; 111; 211; 311) mit einem Frischluftrückführungssystem (13, 15; 312, 313, 315) versehen ist, das eine zusätzliche Regeleinrichtung (15; 115; 215; 315) zum Einstellen der Menge durch den ersten Verdichter (11; 111; 211; 311) rückgeführten Frischluft aufweist.

2. Turboladersystem gemäß Anspruch 1, wobei das Rückführungssystem (312, 313, 315) eine Kühlvorrichtung (312) zum Kühlen der in den ersten Verdichter (311) rückgeführten Luft aufweist.

3. Turboladersystem gemäß Anspruch 1 oder 2, wobei die Strömungsregelungseinrichtung eine einstellbare Drosselklappe oder Drehdrosselklappe aufweist.

4. Turboladersystem gemäß Anspruch 1 oder 2, wobei die Strömungsregelungseinrichtung ein Rückschlagventil aufweist.

5. Turboladersystem gemäß einem der Ansprüche 1 bis 4, wobei mindestens ein Turbolader ein schmiermittelfreies Lagersystem für die das jeweilige Verdichter und Turbinenlaufrad tragende Welle hat.

6. Sequenzielles Turboladersystem gemäß Anspruch 5, wobei das schmiermittelfreie Lagersystem ein Luftlagersystem ist.

7. Turboladersystem gemäß einem der Ansprüche 1 bis 4, wobei mindestens ein Turbolader ein Kugellagersystem, insbesondere ein Kugellagersystem mit einem Wälzkontakt zwischen der Welle des Turboladers und den Kugellagern hat.

8. Turboladersystem gemäß einem der Ansprüche 1 bis 4, wobei ein Turbolader, ein Turbolader mit einer Turbine mit variablen Geometrie und einem Verdichter mit variabler Geometrie ist.

## Revendications

1. Système de suralimentation muni d'au moins deux turbocompresseurs disposés en parallèle, lesdits turbocompresseurs comprenant un premier compresseur (11 ; 111 ; 211 ; 311) et un second compresseur (9) ayant respectivement un premier conduit d'air frais (6) et un second conduit d'air frais (4), dans lequel ledit premier conduit d'air frais (6) est muni de moyens de régulation d'écoulement (21 ; 121 ; 221 ; 321) à l'entrée dudit premier compresseur (11 ; 111 ; 211 ; 311), et ledit premier compresseur (11 ; 111 ; 211 ; 311) est muni d'un système de remise en circulation d'air frais (13, 15 ; 312, 313, 315) comprenant des moyens de régulation supplémentaires (15 ; 115 ; 215 ; 315) pour ajuster la quantité d'air frais remise en circulation à travers ledit premier compresseur (11 ; 111 ; 211 ; 311).

2. Système de suralimentation selon la revendication 1, dans lequel ledit système de remise en circulation (312, 313, 315) comprend un dispositif de refroidissement (312) pour refroidir l'air remis en circulation dans ledit premier compresseur (311).

3. Système de suralimentation selon la revendication 1 ou 2, dans lequel lesdits moyens de régulation d'écoulement comprennent une soupape ou non clapet d'étranglement ajustable.

4. Système de suralimentation selon la revendication 1 ou 2, dans lequel lesdits moyens de régulation d'écoulement comprennent un clapet antiretour.

5. Système de suralimentation selon l'une quelconque des revendications 1 à 4, dans lequel au moins un turbocompresseur comporte un système de palier sans lubrifiant pour l'arbre portant le compresseur et la roue de turbine respectifs.

6. Système de suralimentation séquentiel selon la revendication 5, dans lequel le système de palier sans lubrifiant est un système de palier d'air.

7. Système de suralimentation selon l'une quelconque des revendications 1 à 4, dans lequel au moins un turbocompresseur comporte un système de roulement à billes, en particulier un système de roulement à billes ayant un contact de roulement entre l'arbre du turbocompresseur et les billes de roulement.

8. Système de suralimentation selon l'une quelconque des revendications 1 à 4, dans lequel l'un des turbocompresseurs est un turbocompresseur comportant une turbine à géométrie variable et un compresseur à géométrie variable.
